# EUROPÄISCHE PATENTSCHRIFT

(11) **EP 2 995 436 B1**
(45) Veröffentlichungstag und Bekanntmachung des Hinweises auf die Patenterteilung: **22.02.2017**
(21) Anmeldenummer: 14184300.3
(22) Anmeldetag: 10.09.2014
(51) Int. Cl.: B29B 7/48, B29B 7/74, B29B 7/84, B29B 7/90, B29B 9/14, B29C 47/00, B29C 47/08, B29C 47/10, B29C 47/36, B29C 47/68, B29B 17/00, B29B 9/06, B29C 47/50, B29C 47/64, B29C 47/76, B29C 47/88, B29K 105/26

(54) **Vorrichtung und Verfahren zur Herstellung eines gefüllten polymeren Kompositmaterials**
Device and method for manufacturing a filled polymer composite material
Dispositif et procédé de fabrication d'un matériau composite en polymère rempli

(43) Veröffentlichungstag der Anmeldung: 16.03.2016
(73) Patentinhaber: Starlinger & Co Gesellschaft m.b.H., 1060 Wien (AT)
(72) Erfinder: LOVRANICH, Christian, 2564 Weissenbach an der Triesting (AT); PECHHACKER, Andreas, 2571 Altenmarkt an der Triesting (AT); WALLNER, Martin, 2560 Berndorf (AT); WEBERHOFER, Christoph, 2564 Weissenbach an der Triesting (AT); OBERMÜLLER, Stefan, 2571 Altenmarkt an der Triesting (AT)
(74) Vertreter: Schwarz & Partner

(56) Entgegenhaltungen:
- EP-A2- 0 706 873
- WO-A1-2013/101377
- AT-B- 307 012
- DE-C1- 4 411 164
- DE-T2- 60 225 057
- US-A1- 2008 093 763
- US-B1- 6 186 769

## Beschreibung

Die vorliegende Erfindung betrifft eine Vorrichtung und ein Verfahren zur Herstellung eines gefüllten polymeren Kompositmaterials gemäß dem Oberbegriff der Ansprüche 1 und 13.

Aus dem Stand der Technik sind bereits Vorrichtungen und Verfahren zur Herstellung von mit Fasern gefüllten Polymeren bekannt, zum Beispiel aus den Druckschriften AT 307 012 B,

EP 0 706 873 A2, WO 2013/101377 A1 und EP 2 525 951 B1.

In der Druckschrift EP 2 525 951 B1 werden beispielsweise Fasermaterialien aus der Holz- bzw. Papier- und Zellstoffverarbeitung als Füllstoffe mit einem nicht geschmolzenen Trägermaterial in einem Reaktor bzw. in einem Schneidverdichter gemischt und in eine Austragseinrichtung gefördert. Die faserartigen Füllstoffe werden dazu dem noch nicht aufgeschmolzenen Trägermaterial, beispielsweise einem natürlichen oder synthetischen Polymer, bei einer Temperatur unterhalb des Schmelzbereiches beigemengt.

In der Druckschrift US 5,916,932 A wird die Verwendung von Recyclingmaterial zur Herstellung eines Kompositmaterials aus einer extrudierten Mischung eines Polymers, beispielsweise Polyethylen hoher Dichte (HDPE), und einem Fasermaterial, beispielsweise Fiberglas, beschrieben. Das beschriebene Kompositmaterial kann beispielhaft zur Herstellung von Eisenbahnschwellen verwendet werden. Eine Aufbereitung bzw. Reinigung des Polymers im Zuge des Herstellungsverfahrens ist nicht vorgesehen.

Weiters wird auch in der Druckschrift DE 10 2011 117 760 A1 ein Werkstoff beschrieben, der aus Recycling-Polyolefinen und Glasfaserbündel hergestellt ist, und der ebenfalls für die Produktion von hochbelasteten Formkörpern wie Eisenbahnschwellen verwendet wird. Zur Herstellung des Werkstoffes wird das Kunststoffmaterial zunächst zerkleinert, vorzugsweise mit den Glasfasern vermischt und pelletiert oder agglomeriert. Anschließend wird die Mischung beispielsweise bei Temperaturen zwischen 170°C und 230°C extrudiert und regranuliert. Alternativ dazu kann die Verarbeitung direkt, also ohne Regranulation, zu einem Vollprofil über ein gekühltes Profilwerkzeug verarbeitet werden. Eine Aufbereitung oder Reinigung der Ausgangsmaterialien ist auch hier nicht vorgesehen.

Verunreinigte Polymerabfälle müssen üblicherweise bei der Aufbereitung gereinigt werden, um beispielsweise Metallsplitter oder vergleichbare Verunreinigungen aus dem Polymerabfall entfernen zu können. Werden faserartige Füllstoffe bereits dem noch nicht aufgeschmolzenen Polymerabfall beigemengt, wie dies gemäß der Druckschrift EP 2 525 951 B1 der Fall ist, so kann das Gemisch nach dem Aufschmelzen anschließend nicht mehr mittels Filtration gereinigt werden, da die beigemengten Fasern an der Filtrationseinrichtung zurückgehalten und die Filtrationseinrichtung rasch verblocken würden.

Es ist somit Aufgabe der Erfindung eine Vorrichtung bereit zu stellen, in welcher ein polymeres Trägermaterial aufbereitet bzw. gereinigt werden kann, insbesondere, wenn es einen Hauptanteil an Recycling-Polymerabfall enthält, und faserartige Füllstoffe in das polymere Trägermaterial eingebracht werden können. Weiters ist es eine der Aufgaben der Erfindung, ein Herstellungsverfahren für ein gefülltes polymeres Kompositmaterial, das ein polymeres Trägermaterial und ein Fasermaterial als Füllmaterial enthält, wobei das polymere Trägermaterial bevorzugt einen Hauptanteil an Recycling-Polymerabfall enthält, bereitzustellen, bei dem die Aufbereitung des polymeren Trägermaterials und das Einbringen von Fasern in einem kombinierten Herstellungsverfahren gemeinsam durchgeführt werden können.

Diese Aufgaben werden durch eine Vorrichtung mit den Merkmalen des Anspruchs 1 und durch ein Verfahren mit den Merkmalen des Anspruchs 13 gelöst. Vorteilhafte Ausgestaltungen der Erfindung sind in den Unteransprüchen definiert.

Die erfindungsgemäße Vorrichtung zur Herstellung eines gefüllten polymeren Kompositmaterials, das ein polymeres Trägermaterial und ein Fasermaterial als Füllmaterial enthält, wobei das polymere Trägermaterial bevorzugt einen Hauptanteil an Recycling-Polymerabfall enthält, umfasst eine erste Extrusionseinrichtung zum Aufschmelzen des polymeren Trägermaterials mit einem Einlass für das polymere Trägermaterial und einem Auslass für das geschmolzene polymere Trägermaterial, eine Schmelzeaufbereitungseinrichtung zur Reinigung des aufgeschmolzenen polymeren Trägermaterials mit einem Eingang, der mit dem Ausgang der ersten Extrusionseinrichtung verbunden ist, und mit einem Ausgang für das gereinigte polymere Trägermaterial, sowie eine zweite Extrusionseinrichtung. Die zweite Extrusionseinrichtung weist einen Schmelzeeinlass auf, der mit dem Ausgang der Schmelzeaufbereitungseinrichtung verbunden ist, und weist einen stromaufwärts vom Schmelzeeinlass angeordneten Fasermaterialeinlass für das Fasermaterial auf, wobei die zweite Extrusionseinrichtung zumindest eine Entgasungseinrichtung aufweist.

Mit der Schmelzeaufbereitungseinrichtung kann das aufgeschmolzene polymere Trägermaterial von festen Verunreinigungen, wie beispielsweise Metallsplittern, gereinigt werden. Bevorzugt umfasst die Schmelzeaufbereitungseinrichtung eine Filtereinrichtung, wie beispielsweise einen Rotationsfilter und/oder einen Rückspülkolbenfilter.

Nach der Reinigung in der Schmelzeaufbereitungseinrichtung wird die Polymerschmelze über eine Zuleitung mit optionaler Schmelzepumpe in die zweite Extrusionseinrichtung geleitet. Das Fasermaterial wird stromaufwärts von der Polymerschmelze in die zweite Extrusionseinrichtung eingebracht, wodurch das Fasermaterial ohne Zerbrechen in kleinere Stücke mit dem polymeren Trägermaterial vermischt wird und möglichst lange Faserlängen beibehalten werden können. Weiters ist an der erfindungsgemäßen Vorrichtung vorteilhaft, dass das Fasermaterial erst stromabwärts von der Schmelzeaufbereitungseinrichtung dem geschmolzenen polymeren Trägermaterial zugesetzt wird. Andernfalls wäre eine Reinigung eines mit Fasern versetzten Polymers nicht möglich.

Das Gemisch aus dem polymeren Trägermaterial und dem zugeführten Fasermaterial wird in der zweiten Extrusionseinrichtung auch entgast, wodurch sich die Qualität des erzeugten Kompositmaterials erhöht.

Im Rahmen der Erfindung können unterschiedlichste Kunststoffe als polymere Trägermaterialien eingesetzt bzw. verarbeitet werden. Insbesondere eignet sich die Erfindung für die folgenden Kunststoffarten als polymere Trägermaterialien:
- Polyethylenterephthalat (PET),
- Polypropylen (PP),
- Polethylen (PE),
- Polyamid (PA),
- Polystyrol (PS).

Grundsätzlich können im Rahmen der Erfindung diverse Fasermaterialien als Füllmaterial in das polymere Trägermaterial eingebracht werden. Es können anorganische und/oder organische Fasern, wie Glasfasern, Kohlefasern, Aramidfasern, und/oder Naturfasern, z.B. Fasern aus Flachs, in das polymere Trägermaterial eingemischt werden. Die Fasermaterialien können in Form von Geweben, Gelegen, Matten bzw. Vliesen, Bändern, Rovings, Faserschnitzeln mit Faserlängen von z.B. 3 mm, und/oder gemahlen Fasern mit Faserlängen von z.B. 0,2 mm der Vorrichtung zugeführt werden. Ebenso kann das Fasermaterial aus Kurzfasern (mit Faserlängen von 0,1 mm bis 1 mm), aus Langfasern (mit Faserlängen von 1 mm bis 50 mm), aus Endlosfasern (mit Faserlängen über 50 mm) oder aus Kombinationen daraus bestehen. Die Fasern können dazu rein oder bereits mit Trägermaterialen versetzt sein. Somit können beispielsweise auch faserverstärkte Kunststoffabfälle als Fasermaterial im Rahmen der Erfindung verwendet werden.

Insbesondere können mit der Erfindung auch Glasfaservliese als Fasermaterial verarbeitet werden. Wie bereits in der Druckschrift DE 195 03 632 C1 beschrieben enthalten Glasfaservliese Acetate und auch Acrylate, welche sich positiv auf das hergestellte Kompositmaterial auswirken. Diese im Glasfaservlies enthaltenen Komponenten bewirken zusätzlich zur Glasfaser eine gezielte positive Eigenschaftsmodifizierung des hergestellten Kompositmaterials bezüglich Verträgüchkeitsvermittlung, Steifigkeitsverbesserung, Reißdehnungserhöhung und/oder Schlagzähigkeitserhöhung.

Besonders vorteilhaft an der erfindungsgemäßen Vorrichtung ist, dass sowohl beim polymeren Trägermaterial, als auch beim zugesetzten Fasermaterial hohe Anteile an Recyclingmaterialien eingesetzt werden können, weshalb mit der erfindungsgemäßen Vorrichtung ein besonders Ressourcen schonendes Kompositmaterial herstellbar ist. Mit der erfindungsgemäßen Vorrichtung können polymere Trägermaterialien mit Anteilen bis einschließlich 100% an Recycling-Polymerabfall bzw. Fasermaterialien mit Anteilen bis einschließlich 100% an Recycling-Faserabfall verarbeitet werden.

Weiters eignet sich die erfindungsgemäße Vorrichtung sowohl zur Herstellung von Granulaten als auch zur Direktextrusion von Kompositmaterial.

Außerdem ist es im Rahmen der Erfindung möglich, das polymere Trägermaterial als Ausgangsmaterial vor der Zuführung zur ersten Extrusionseinrichtung gegebenenfalls noch weiteren Aufbereitungsschritten zu unterziehen. Beispielsweise können dazu zumindest ein Agglomerator und/oder zumindest ein Schneidverdichter und/oder zumindest ein SSP-Reaktor (SSP abgekürzt für Solid State Polycondensation), in dem das Ausgangsmaterial einer Wärmebehandlung unter Vakuum unterzogen wird, zur Vorbehandlung des polymeren Trägermaterials der ersten Extrusionseinrichtung vorgeschaltet sein.

Zur Erhöhung der Qualität des hergestellten Kompositmaterials können gemäß der Erfindung mehrere Entgasungseinrichtungen vorgesehen werden, wobei die zweite Extrusionseinrichtung eine erste Entgasungseinrichtung in einem Längenabschnitt, der stromabwärts vom Schmelzeeinlass angeordnet ist, umfasst. Die erste Entgasungseinrichtung entgast das geschmolzene polymere Trägermaterial während seiner Vermischung mit dem Fasermaterial. Zusätzlich kann stromabwärts von der ersten Entgasungseinrichtung eine zweite Entgasungseinrichtung vorgesehen sein, die vorzugsweise an einer Position angeordnet ist, die in einem Bereich des Extruders liegt, der durch ein Verhältnis der Länge einer Schnecke des zweiten Extruders zum Durchmesser der Schnecke von 15 bis 20, gemessen von der stromaufwärtigen ersten Entgasungseinrichtung, definiert ist. Diese zweite Entgasungseinrichtung entgast das Gemisch aus polymerem Trägermaterial und Fasermaterial vor seinem Austrag aus der zweiten Extrudereinrichtung und kommt insbesondere bei stark verunreinigten Ausgangsmaterialien zum Einsatz. Erforderlichenfalls können, insbesondere bei besonders stark verunreinigten bzw. bei hygroskopischen Ausgangsmaterialen, weitere Entgasungseinrichtungen vorgesehen werden. In einer Ausführungsform der Erfindung weist auch die erste Extrusionseinrichtung eine Entgasungseinrichtung auf, mit der das polymere Trägermaterial bereits während des Aufschmelzens in der ersten Extrusionseinrichtung entgast wird, wodurch die weitere Behandlung der Polymerschmelze, insbesondere während der Reinigung in der Schmelzeaufbereitungseinrichtung, vereinfacht wird.

Die zweite Extrusionseinrichtung ist vorzugsweise mit einem eigenen Antrieb ausgestattet und kann beispielhaft sowohl als Einschnecken-, als auch als Doppelschneckenextruder mit gleichläufigen oder gegenläufigen, parallelen oder konisch zulaufenden Extruderschnecken ausgeführt sein.

In einer weiteren vorteilhaften Ausführungsvariante der Erfindung umfasst eine Vorrichtung weiterhin ein Zwangsbeschickungssystem, mit dem das Fasermaterial der zweiten Extrusionseinrichtung zuführbar ist. Um eine optimale Zudosierung des Fasermaterials gewährleisten zu können, kann dieses über eine sogenannte Zwangsfütterung (englisch: force feeding) erfolgen. Beispielsweise kann das Zwangsbeschickungssystem eine oder mehrere Doppelschnecken umfassen, mit deren Hilfe das Fasermaterial gleichmäßig der zweiten Extrusionseinrichtung zuführbar ist.

Besonders vorteilhaft umfasst bei einer erfindungsgemäßen Vorrichtung das Zwangsbeschickungssystem eine Brückenbrechereinrichtung und/oder eine Faserzerkleinerungseinrichtung und/oder eine Trocknungseinrichtung. Insbesondere beim Einsatz von Recycling-Faserabfällen kann keine einheitliche Länge der zugeführten Fasern garantiert werden. Durch die unterschiedlichen Faserlängen neigt dieses Material besonders zu unerwünschten Brückenbildungen im Bereich der Zudosierung. Die Brückenbrechereinrichtung dient dazu, eine Brückenbildung des zudosierten Fasermaterials und somit Betriebsstörungen zu vermeiden. Es kann auch zweckmäßig sein, im stromaufwärtigen Längenabschnitt der zweiten Extrusionseinrichtung, in dem das Fasermaterial zugeführt wird, die Geometrie oder Gangtiefe der Extruderschnecke unterschiedlich von den restlichen Längenabschnitten der zweiten Extrusionseinrichtung zu gestalten, um eine optimale Zuführung des Fasermaterials gewährleisten zu können.

Weiters kann es erforderlich sein, dass vor der Zuführung des Fasermaterials dieses noch aufbereitet werden muss. Dazu kann die Vorrichtung weitere Aufbereitungseinrichtungen wie beispielsweise Zerkleinerungsvorrichtungen und/oder Trocknungseinrichtungen umfassen.

Zerkleinerungsvorrichtungen wie beispielsweise Mühlen, Guillotinen oder dergleichen sind besonders im Fall des Einsatzes von Recycling-Faserabfällen wie Fasermatten, Faservliesen, Geweben oder bei faserverstärkten Kunststoffen, wie diese als Abfall beispielsweise bei der Produktion von Windrädern in größeren Mengen anfallen, vorteilhaft. Eine Vortrocknung des Fasermaterials ist insbesondere bei hygroskopischen Materialien bzw. bei feuchten Fasermaterialien von Vorteil.

In einer besonders robusten Ausführungsvariante der Erfindung ist bei einer Vorrichtung das Zwangsbeschickungssystem verschleißgeschützt ausgerüstet. Verschleißgeschützte Ausführungen des Zwangsbeschickungssystems können durch den Einsatz von pulvermetallurgisch behandelten Stählen und/oder das Vorsehen von gehärteten, gepanzerten und/oder gehippten Oberflächen, mit denen das Zwangsbeschickungssystem zumindest an besonders neuralgischen Oberflächenabschnitten oder aber auch zur Gänze ausgerüstet wird, realisiert werden.

Vorteilhaft ist bei einer Vorrichtung gemäß der Erfindung das Zwangsbeschickungssystem mit einer Durchsatzsteuerung ausgestattet, wobei ein Ist-Durchsatz des zugeführten Fasermaterials mittels einer Durchsatzerkennungseinrichtung bestimmbar ist und die Durchsatzsteuerung den Ist-Durchsatz mit einem wählbaren Soll-Durchsatz vergleicht und den Materialdurchsatz des Zwangsbeschickungssystems so regelt, dass die Abweichung des Ist-Durchsatzes vom Soll-Durchsatz minimal ist. Die Regelung des Materialdurchsatzes kann durch eine Regelung der Beschickungsdrehzahl erfolgen, wenn eine Schnecke, z.B. eine Doppelschnecke, zur Materialzwangsförderung vorgesehen ist.

In einer weiteren vorteilhaften Ausführung einer erfindungsgemäßen Vorrichtung ist das Zwangsbeschickungssystem mit einer Durchsatzsteuerung ausgestattet, die Messungen der Ist-Dichte des Kompositmaterials vornimmt und die gemessene Ist-Dichte mit einer wählbaren Soll-Dichte vergleicht und den Materialdurchsatz des Zwangsbeschickungssystems so regelt, dass die Abweichung der Ist-Dichte von der Soll-Dichte minimal ist.

In einer zweckmäßigen Weiterbildung der Erfindung ist ein dynamischer Schmelzemischer am stromabwärtigen Ende der zweiten Extrusionseinrichtung angeordnet, mit dem ein Spaltmaß einstellbar ist. Somit erfolgt vorteilhaft durch den dynamischen Schmelzemischer eine Verlängerung der zweiten Extrusionseinrichtung unmittelbar vor einem nachfolgenden Granulierkopf einer stromabwärts anschließenden Granulierungseinrichtung. Durch Auswählen eines Spaltmaßes am dynamischen Schmelzemischer ist eine maximale Faserlänge des Fasermaterials einstellbar.

In einer weiteren Ausführung der Erfindung ist vor der Zuführung des Gemischs aus aufgeschmolzenem, gereinigtem polymerem Trägermaterial und Fasermaterial in eine Granuliereinheit bzw. eine andere Austragsvorrichtung eine Sicherheitsfiltrationseinheit vorgesehen, wobei die Öffnungen dieser Filtrationseinheit kleiner sind als die Bohrungen einer im Anschluss angeordneten Granulierdüse oder sonstiger Austragsöffnungen. Die Öffnungen der Sicherheitsfiltrationseinheit sollten jedoch mindestens 0,5 mm groß sein, damit die beigemengten Fasern nicht aus dem Gemisch gefiltert werden. Durch diese Sicherheitsfiltrationseinheit werden Klumpen, die aus der Verarbeitung von Recycling Fasermaterial stammen bzw. sich während der Verarbeitung im Extruder bilden, aus dem Polymer Faser Gemisch gefiltert und erhöhen somit die Produktionsstabilität.

Die vorgenannten erfindungsgemäßen Aufgaben werden weiters mit einem Verfahren zur Herstellung eines gefüllten polymeren Kompositmaterials, das ein polymeres Trägermaterial und ein Fasermaterial als Füllmaterial enthält, wobei das polymere Trägermaterial bevorzugt einen Hauptanteil an Recycling-Polymerabfall (3) enthält, gelöst, das die folgenden Schritte aufweist:
- Einbringen des polymeren Trägermaterials in eine erste Extrusionseinrichtung;
- Aufschmelzen sowie gegebenenfalls Entgasen des polymeren Trägermaterials in der ersten Extrusionseinrichtung;
- Reinigen des geschmolzenen polymeren Trägermaterials mittels einer Schmelzeaufbereitungseinrichtung, welche vorzugsweise eine Filtereinrichtung umfasst;
- Zuführen des aufgeschmolzenen, gereinigten polymeren Trägermaterials in eine zweite Extrusionseinrichtung;
- Einbringen von Fasermaterial in die zweite Extrusionseinrichtung stromaufwärts von der Zuführung des aufgeschmolzenen, gereinigten polymeren Trägermaterials;
- Mischen des Fasermaterials und des aufgeschmolzenen, gereinigten polymeren Trägermaterials in der zweiten Extrusionseinrichtung;
- Entgasen des Gemisches aus dem aufgeschmolzenen, gereinigten polymeren Trägermaterial und dem Fasermaterial in der zweiten Extrusionseinrichtung.

Die vorgenannten Vorteile der erfindungsgemäßen Vorrichtung gelten sinngemäß auch für das erfindungsgemäße Herstellungsverfahren.

Zweckmäßig wird bei dem Verfahren gemäß der Erfindung in der zweiten Extrusionseinrichtung das zugeführte Fasermaterial stromaufwärts von der Zuführung des aufgeschmolzenen, gereinigten polymeren Trägermaterials entgast und/oder wird das Gemisch aus dem aufgeschmolzenen, gereinigten polymeren Trägermaterial und dem Fasermaterial entgast.

In einer weiteren vorteilhaften Verfahrensvariante wird das Fasermaterial mit einem Zwangsbeschickungssystem der zweiten Extrusionseinrichtung zugeführt, wobei das Zwangsbeschickungssystem gegebenenfalls mit einer Durchsatzsteuerung ausgestattet ist. Die Durchsatzsteuerung kann einen Ist-Durchsatz des aufgeschmolzenen, gereinigten polymeren Trägermaterials bestimmen, den Ist-Durchsatz mit einem wählbaren Soll-Durchsatz vergleichen und den Materialdurchsatz des Zwangsbeschickungssystems so regeln, dass die Abweichung des Ist-Durchsatzes vom Soll-Durchsatz minimal ist. Alternativ oder ergänzend kann die Durchsatzsteuerung Messungen der Ist-Dichte des Kompositmaterials vornehmen, die gemessene Ist-Dichte mit einer wählbaren Soll-Dichte vergleichen und den Materialdurchsatz des Zwangsbeschickungssystems so regeln, dass die Abweichung der Ist-Dichte von der Soll-Dichte minimal ist.

Durch die Ausstattung des Zwangsbeschickungssystems mit einer Durchsatzsteuerung wird gewährleistet, dass die Menge des zugeführten Fasermaterials auch bei unbekanntem Schüttgewicht des Fasermaterials jeweils entsprechend einer vorgegebenen Rezeptur erfolgt. Weitere Einzelheiten, Merkmale und Vorteile der Erfindung ergeben sich aus der nachfolgenden Erläuterung eines in den Zeichnungen schematisch dargestellten Ausführungsbeispiels. In den Zeichnungen zeigen:
- Fig. 1 in einem Verfahrensfließbild eine erfindungsgemäße Vorrichtung zur Herstellung eines Kompositmaterials, das ein mit einem Fasermaterial gefülltes polymeres Trägermaterial enthält;
- Fig. 2 eine zusätzliche Ausführungsvariante.

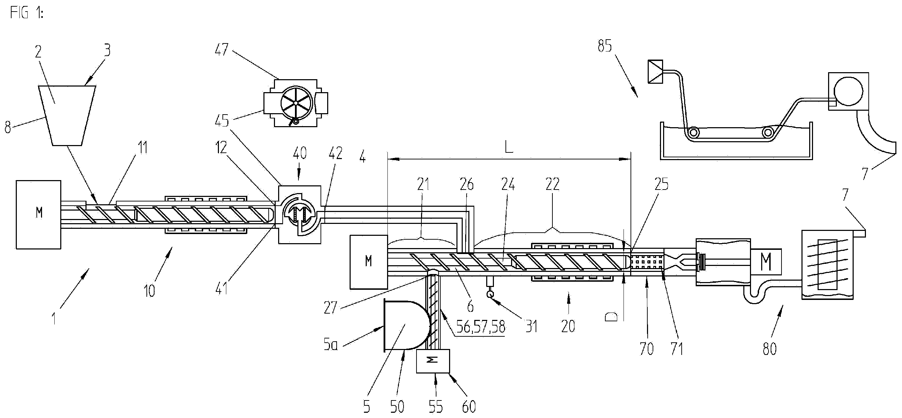

Fig. 1 veranschaulicht eine erfindungsgemäße Vorrichtung 1 zur Herstellung eines Kompositmaterials 7 aus einem polymeren Trägermaterial 4 und einem Fasermaterial 5. Dazu wird als Ausgangsmaterial ein polymeres Trägermaterial 2, insbesondere mit einem Hauptanteil an Recycling-Polymerabfall 3, verwendet, welches nach einer entsprechenden Aufbereitung bzw. Reinigung als gereinigtes polymeres Trägermaterial 4 mit dem Fasermaterial 5 zu einem Gemisch 6 vermengt wird.

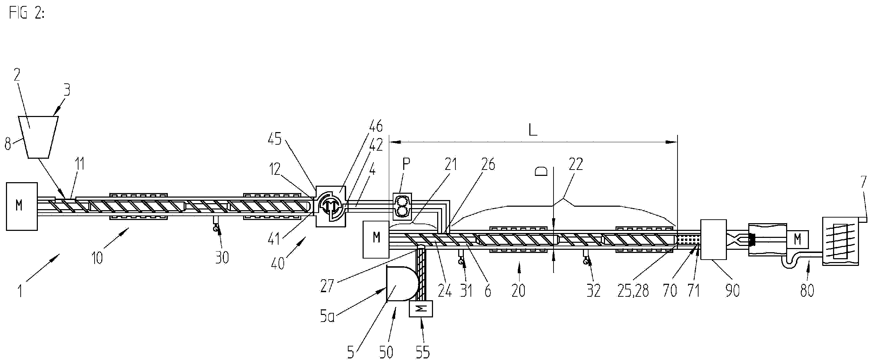

Die Vorrichtung 1 umfasst eine erste Extrusionseinrichtung 10 mit einem Einlass 11 für das polymere Trägermaterial 2, das in der ersten Extrusionseinrichtung 10 aufgeschmolzen wird, und einem Auslass 12 für das geschmolzene polymere Trägermaterial 2. Der Auslass 12 ist mit dem Eingang 41 einer Schmelzeaufbereitungseinrichtung 40 verbunden, in der das aufgeschmolzene polymere Trägermaterial 2 gereinigt wird. Die Schmelzeaufbereitungseinrichtung 40 umfasst in dieser Ausführungsform eine Filtereinrichtung 45, wobei beispielhaft ein Einkolbenrückspülfilter 46 (siehe Fig. 2) und/oder ein kontinuierlicher Rotationsfilter 47 als Filtereinrichtung 45 verwendet werden können. Der Ausgang 42 der Schmelzeaufbereitungseinrichtung 40 ist - direkt oder über eine Leitung - mit einem Schmelzeeinlass 26 einer zweiten Extrusionseinrichtung 20 verbunden. Stromaufwärts vom Schmelzeeinlass 26 ist an der zweiten Extrusionseinrichtung 20 ein Fasermaterialeinlass 27 für das Fasermaterial 5 vorgesehen. Die zweite Extrusionseinrichtung 20 weist eine erste Entgasungseinrichtung 31 in einem Längenabschnitt 22 der zweiten Extrusionseinrichtung auf, der stromabwärts vom Schmelzeeinlass 26 angeordnet ist. Im stromabwärtigen Längenabschnitt 22 werden das polymere Trägermaterial 2 und das Fasermaterial 5 miteinander zum Gemisch 6 des Kompositmaterials 7 vermischt. Das Kompositmaterial 7 wird am stromabwärtigen Ende 25 der zweiten Extrusionseinrichtung 20 ausgetragen und kann gegebenenfalls weiter verarbeitet werden.

In der Ausführungsvariante in Fig. 2 ist bei der zweiten Extrusionseinrichtung 20 stromabwärts von der ersten Entgasungseinrichtung 31 noch eine zweite Entgasungseinrichtung 32 vorgesehen, die in einem Bereich des Extruders liegt, der durch ein Verhältnis der Länge L der Schnecke 24 der zweiten Extrusionseinrichtung 20 zum Durchmesser der Schnecke 24 von 15 bis 20, gemessen von der ersten Entgasungseinrichtung 31, definiert ist. Dadurch können auch besonders verunreinigte Recycling-Abfälle verarbeitet werden. Die Entgasungseinrichtungen 31, 32 sind hier im Wesentlichen baugleich ausgeführt.

Bei der ersten Extrusionseinrichtung 10 ist auch eine Entgasungseinrichtung 30 stromaufwärts vor einer nachfolgenden Schmelzeaufbereitungseinrichtung 40 vorgesehen.

Das polymere Trägermaterial 2 mit einem hohen Anteil an Polymerabfall 3, welcher Produktions- und/oder Verbraucherabfälle umfasst, wird in Pfeilrichtung aus einem Vorratslager 8 dem Einlass 11 der ersten Extrusionseinrichtung 10 zugeführt, in welcher das polymere Trägermaterial 2 aufgeschmolzen wird. Nach der Reinigung in der Filtereinrichtung 45 wird die Polymerschmelze 4, also das bereits gereinigte sowie aufgeschmolzene polymere Trägermaterial 2, anschließend in die zweite Extrusionseinrichtung 20 geleitet. Erforderlichenfalls sind dazu eine oder mehrere Schmelzepumpen P in der Zuleitung zur zweiten Extrusionseinrichtung 20 vorgesehen, wie in Fig. 2 schematisch dargestellt ist. Die Einbringung des Fasermaterials 5 in die zweite Extrusionseinrichtung 20 erfolgt im stromaufwärtigen Längenabschnitt 21 der zweiten Extrusionseinrichtung 20 stromaufwärts vom Schmelzeeinlass 26, durch den die Polymerschmelze 4 in die zweite Extrusionseinrichtung 20 eingebracht wird. Im stromabwärtigen Längenabschnitt 22 der zweiten Extrusionseinrichtung 20 werden die Polymerschmelze 4 und das Fasermaterial 5 zu dem Gemisch 6 vermengt und mittels der Entgasungseinrichtungen 31, 32 entgast. Die Einbringung des Fasermaterials 5 in die zweite Extrusionseinrichtung 20 hat den Vorteil, dass die Fasern nicht durch die erste Extrusionseinrichtung 10 hindurch gefördert werden und dabei in noch kleinere Stücke zerbrochen bzw. weiter verkürzt werden.

Die beiden Extrusionseinrichtungen 10 bzw. 20 weisen hier jeweils voneinander unabhängige Motorantriebe M auf.

Eine Dosiereinheit 50 dient dazu, das Fasermaterial 5 entsprechend einer wählbaren oder vorgegebenen Rezeptur der zweiten Extrusionseinrichtung 20 genau zudosieren zu können. Dazu ist ein Zwangsbeschickungssystem 55 vorgesehen, welches hier eine Brückenbrechereinrichtung 56, eine Faserzerkleinerungseinrichtung 57 sowie eine Trocknungseinrichtung 58 umfasst, um mögliche Verblockungen oder Betriebsunterbrechungen infolge von fehlerhaft dosiertem Fasermaterial 5 zu verhindern.

Weiters ist eine Durchsatzsteuerung 60 vorgesehen, wobei hier mit einer Durchsatzerkennungseinrichtung ein Ist-Durchsatz des aufgeschmolzenen, gereinigten polymeren Trägermaterials 4 bestimmt wird und die Durchsatzsteuerung 60 einen Vergleich des Ist-Durchsatzes mit einem wählbaren Soll-Durchsatz vornimmt und eine Beschickungsdrehzahl des Zwangsbeschickungssystems 55 entsprechend regelt.

Weiters ist am stromabwärtigen Ende 25 der zweiten Extrusionseinrichtung 20 ein dynamischer Schmelzemischer 70 vorgesehen, wodurch eine Verlängerung der zweiten Extrusionseinrichtung 20 unmittelbar vor einem Granulierkopf einer anschließenden Granulierungseinrichtung 80 erzielt wird. Durch die Einstellung eines Spaltmaßes 71 am dynamischen Schmelzemischer 70 kann eine maximale Faserlänge des Fasermaterials 5 bestimmt werden.

Die beschriebene Vorrichtung 1 und das damit ausführbare Herstellungsverfahren eignen sich sowohl zur Direktextrusion von Kompositmaterial 7 als auch zur Herstellung von Kompositmaterial 7 in Granulatform. Dazu kann alternativ zur Granulierungseinrichtung 80, beispielsweise einer hier gezeigten Wasserringgranulierung, auch eine Stranggranulierungseinrichtung 85, welche vorzugsweise automatisiert ist, eingesetzt werden.

Außerdem ist es möglich, wie bereits weiter oben erwähnt, das polymere Trägermaterial 2 als Ausgangsmaterial vor der Zuführung zur ersten Extrusionseinrichtung 10 erforderlichenfalls noch weiteren Aufbereitungsschritten zu unterziehen und dazu beispielsweise in einem Agglomerator, Schneidverdichter und/oder SSP-Reaktor zu behandeln. Diese zusätzlichen Aggregate sind in den Abbildungen nicht explizit dargestellt.

Ebenso kann mittels der Brückenbrechereinrichtung 56, der Faserzerkleinerungseinrichtung 57 und/oder der Trocknungseinrichtung 58 das Fasermaterial 5 vor der Zuführung zur zweiten Extrusionseinrichtung 20 erforderlichenfalls noch weiteren Aufbereitungsschritten unterzogen und beispielsweise getrocknet und/oder weiter zerkleinert werden.

### Liste der verwendeten Bezugszeichen:

- 1: Vorrichtung
- 2: polymeres Trägermaterial
- 3: Recycling-Polymerabfall
- 4: Polymerschmelze aus gereinigtem polymerem Trägermaterial
- 5: Fasermaterial
- 5a: Recycling-Fasermaterial
- 6: Gemisch aus polymerem Trägermaterial und Fasermaterial
- 7: Kompositmaterial
- 8: Vorratslager
- 10: erste Extrusionseinrichtung
- 11: Einlass der ersten Extrusionseinrichtung
- 12: Auslass der ersten Extrusionseinrichtung
- 20: zweite Extrusionseinrichtung
- 21: stromaufwärtiger Längenabschnitt der zweiten Extrusionseinrichtung
- 22: stromabwärtiger Längenabschnitt der zweiten Extrusionseinrichtung
- 23: Position einer Entgasungseinrichtung
- 24: Extruderschnecke
- 25: stromabwärtiges Ende der zweiten Extrusionseinrichtung
- 26: Schmelzeeinlass
- 27: Fasermaterialeinlass
- 28: Kompositmaterialauslass
- 30: Entgasungseinrichtung (bzw. 31, 32)
- 40: Schmelzeaufbereitungseinrichtung
- 41: Eingang der Schmelzeaufbereitungseinrichtung
- 42: Ausgang der Schmelzeaufbereitungseinrichtung
- 45: Filtereinrichtung
- 46: Einkolbenrückspülfilter
- 47: kontinuierlicher Rotationsfilter
- 50: Dosiereinheit
- 55: Zwangsbeschickungssystem
- 56: Brückenbrechereinrichtung
- 57: Faserzerkleinerungseinrichtung
- 58: Trocknungseinrichtung
- 60: Durchsatzsteuerung
- 70: Schmelzemischer
- 71: Spaltmaß
- 80: Granulierungseinrichtung
- 85: Stranggranulierungseinrichtung
- 90: Sicherheitsfiltrationseinheit
- L: Länge der Extruderschnecke 24
- D: Durchmesser der Extruderschnecke 24
- M: Motorantrieb
- P: Schmelzepumpe

## Patentansprüche

1. Vorrichtung (1) zur Herstellung eines gefüllten polymeren Kompositmaterials (7), das ein polymeres Trägermaterial (2) und ein Fasermaterial (5) als Füllmaterial enthält, wobei das polymere Trägermaterial (2) bzw. das Fasermaterial (5) bevorzugt einen Hauptanteil an Recycling-Polymerabfall (3) bzw. Recycling-Fasermaterial (5a) enthält, umfassend eine erste Extrusionseinrichtung (10) zum Aufschmelzen des polymeren Trägermaterials (2) mit einem Einlass (11) für das polymere Trägermaterial (2) und einem Auslass (12) für das geschmolzene polymere Trägermaterial (2), sowie eine zweite Extrusionseinrichtung (20), wobei die zweite Extrusionseinrichtung (20) zumindest eine Entgasungseinrichtung (31, 32) aufweist, **dadurch gekennzeichnet, dass** die Vorrichtung eine Schmelzeaufbereitungseinrichtung (40) zur Reinigung des aufgeschmolzenen polymeren Trägermaterials (2) umfasst, welche Schmelzaufbereitungseinrichtung (40) einen Eingang (41), der mit dem Ausgang (12) der ersten Extrusionseinrichtung (10) verbunden ist, und einen Ausgang (42) für das gereinigte polymere Trägermaterial (4) aufweist, und dass die zweite Extrusionseinrichtung (20) einen Schmelzeeinlass (26) aufweist, der mit dem Ausgang (42) der Schmelzeaufbereitungseinrichtung (40) verbunden ist, und einen stromaufwärts vom Schmelzeeinlass (26) angeordneten Fasermaterialeinlass (27) für das Fasermaterial (5) aufweist.

2. Vorrichtung (1) nach Anspruch 1, **dadurch gekennzeichnet, dass** die Schmelzeaufbereitungseinrichtung (40) eine Filtereinrichtung (45) umfasst.

3. Vorrichtung (1) nach Anspruch 1 oder 2, **dadurch gekennzeichnet, dass** die zweite Extrusionseinrichtung (20) stromabwärts von einer ersten Entgasungseinrichtung (31) eine zweite Entgasungseinrichtung (32) aufweist, die vorzugsweise an einer Position (23) angeordnet ist, die in einem Bereich des Extruders liegt, der durch ein Verhältnis der Länge (L) einer Schnecke (24) der zweiten Extrusionseinrichtung (20) zum Durchmesser (D) der Schnecke (24) von 15 bis 20, gemessen von der ersten Entgasungseinrichtung (31), definiert ist.

4. Vorrichtung (1) nach einem der vorigen Ansprüche, **dadurch gekennzeichnet, dass** die erste Extrusionseinrichtung (10) eine Entgasungseinrichtung (30) aufweist.

5. Vorrichtung (1) nach einem der vorigen Ansprüche, **gekennzeichnet durch** ein Zwangsbeschickungssystem (55) zur Zufuhr des Fasermaterials (5) zum Fasermaterialeinlass (27) der zweiten Extrusionseinrichtung (20).

6. Vorrichtung (1) nach Anspruch 5, **dadurch gekennzeichnet, dass** das Zwangsbeschickungssystem (55) eine Brückenbrechereinrichtung (56) und/oder eine Faserzerkleinerungseinrichtung (57) und/oder eine Trocknungseinrichtung (58) umfasst.

7. Vorrichtung (1) nach Anspruch 5 oder 6, **dadurch gekennzeichnet, dass** das Zwangsbeschickungssystem (55) durch Verwendung von pulvermetallurgischen Stählen und/oder gehärteten, gepanzerten oder gehippten Oberflächen verschleißgeschützt ausgerüstet ist.

8. Vorrichtung (1) nach einem der Ansprüche 5 bis 7, **dadurch gekennzeichnet, dass** das Zwangsbeschickungssystem (55) mit einer Durchsatzsteuerung (60) ausgestattet ist, wobei ein Ist-Durchsatz des aufgeschmolzenen, gereinigten polymeren Trägermaterials (4) mittels einer Durchsatzerkennungseinrichtung bestimmbar ist und die Durchsatzsteuerung (60) den Ist-Durchsatz mit einem wählbaren Soll-Durchsatz vergleicht und den Materialdurchsatz des Zwangsbeschickungssystems (55) so regelt, dass die Abweichung des Ist-Durchsatzes vom Soll-Durchsatz minimal ist.

9. Vorrichtung (1) nach einem der Ansprüche 5 bis 8, **dadurch gekennzeichnet, dass** das Zwangsbeschickungssystem (55) mit einer Durchsatzsteuerung (60) ausgestattet ist, die Messungen der Ist-Dichte des Kompositmaterials (7) vornimmt und die gemessene Ist-Dichte mit einer wählbaren Soll-Dichte vergleicht und den Materialdurchsatz des Zwangsbeschickungssystems (55) so regelt, dass die Abweichung der Ist-Dichte von der Soll-Dichte minimal ist.

10. Vorrichtung (1) nach einem der vorigen Ansprüche, **gekennzeichnet durch** einen dynamischen Schmelzemischer (70), der am stromabwärtigen Ende (25) der zweiten Extrusionseinrichtung (20) angeordnet ist, mittels dem ein Spaltmaß (71) einstellbar ist.

11. Vorrichtung (1) nach Anspruch 10, **dadurch gekennzeichnet, dass** eine maximale Faserlänge des Fasermaterials (5) mittels Auswählen des Spaltmaßes (71) am dynamischen Schmelzemischer (70) eingestellt wird.

12. Vorrichtung (1) nach einem der vorigen Ansprüche, **dadurch gekennzeichnet, dass** vor der Zuführung des Gemischs aus aufgeschmolzenem, gereinigtem polymerem Trägermaterial und Fasermaterial in eine Granuliereinheit bzw. eine andere Austragsvorrichtung eine Sicherheitsfiltrationseinheit (90) vorgesehen, wobei die Filtrationseinheit Öffnungen aufweist, die einerseits kleiner sind als die Bohrungen einer im Anschluss angeordneten Granulierdüse oder sonstiger Austragsöffnungen, andererseits jedoch mindestens 0,5 mm groß sind.

13. Verfahren zur Herstellung eines gefüllten polymeren Kompositmaterials (7), das ein polymeres Trägermaterial (2) und ein Fasermaterial (5) als Füllmaterial enthält, wobei das polymere Trägermaterial (2) bevorzugt einen Hauptanteil an Recycling-Polymerabfall (3) enthält und wobei das Verfahren folgende Schritte umfasst:
- Einbringen des polymeren Trägermaterials (2) in eine erste Extrusionseinrichtung (10);
- Aufschmelzen sowie gegebenenfalls Entgasen (30) des polymeren Trägermaterials (2) in der ersten Extrusionseinrichtung (10); **gekennzeichnet durch**
- Reinigen des geschmolzenen polymeren Trägermaterials (2) mittels einer Schmelzeaufbereitungseinrichtung (40), welche vorzugsweise eine Filtereinrichtung (41) umfasst;
- Zuführen des aufgeschmolzenen, gereinigten polymeren Trägermaterials (4) in eine zweite Extrusionseinrichtung (20);
- Einbringen von Fasermaterial (5) in die zweite Extrusionseinrichtung (20) stromaufwärts von der Zuführung des aufgeschmolzenen, gereinigten polymeren Trägermaterials (4);
- Mischen des Fasermaterials (5) und des aufgeschmolzenen, gereinigten polymeren Trägermaterials (4) in der zweiten Extrusionseinrichtung (20);
- Entgasen (30) des Gemisches (6) aus dem aufgeschmolzenen, gereinigten polymeren Trägermaterial (4) und dem Fasermaterial (5) in der zweiten Extrusionseinrichtung (20).

14. Verfahren nach Anspruch 13, **dadurch gekennzeichnet, dass** in der zweiten Extrusionseinrichtung (20)
- das zugeführte Fasermaterial (5) stromaufwärts von der Zuführung des aufgeschmolzenen, gereinigten polymeren Trägermaterials (4) entgast (31) wird
und/oder
- das Gemisch (6) aus dem aufgeschmolzenen, gereinigten polymeren Trägermaterial (4) und dem Fasermaterial (5) entgast (32) wird.

15. Verfahren nach Anspruch 13 oder 14, **dadurch gekennzeichnet, dass** das Fasermaterial (5) mittels eines Zwangsbeschickungssystems (55) der zweiten Extrusionseinrichtung (20) zugeführt wird, wobei das Zwangsbeschickungssystem (55) gegebenenfalls mit einer Durchsatzsteuerung (60) ausgestattet ist, die
- einen Ist-Durchsatz des aufgeschmolzenen, gereinigten polymeren Trägermaterials (4) bestimmt, den Ist-Durchsatz mit einem wählbaren Soll-Durchsatz vergleicht und den Materialdurchsatz des Zwangsbeschickungssystems (55) so regelt, dass die Abweichung des Ist-Durchsatzes vom Soll-Durchsatz minimal ist; und/oder
- Messungen der Ist-Dichte des Kompositmaterials (7) vornimmt, die gemessene Ist-Dichte mit einer wählbaren Soll-Dichte vergleicht und den Materialdurchsatz des Zwangsbeschickungssystems (55) so regelt, dass die Abweichung der Ist-Dichte von der Soll-Dichte minimal ist.

## Claims

1. A device (1) for the production of a filled polymeric composite material (7) containing a polymeric substrate material (2) and a fibre material (5) as a filling material, with the polymeric substrate material (2) or, respectively, the fibre material (5) preferably containing a main portion of recycling polymer waste (3) or, respectively, recycling fibre material (5a), comprising a first extrusion device (10) for melting the polymeric substrate material (2) with an inlet (11) for the polymeric substrate material (2) and an outlet (12) for the melted polymeric substrate material (2), as well as a second extrusion device (20), the second extrusion device (20) exhibiting at least one degasification device (31, 32), **characterized in that** the device comprises a melt preparation device (40) for purifying the melted polymeric substrate material (2), which melt preparation device (40) has an entry (41) which is connected to the exit (12) of the first extrusion device (10), and an exit (42) for the purified polymeric substrate material (4), and that the second extrusion device (20) comprises a melt inlet (26) which is connected to the exit (42) of the melt preparation device (40) and comprises a fibre material inlet (27) for the fibre material (5) which is arranged upstream of the melt inlet (26).

2. A device (1) according to claim 1, **characterized in that** the melt preparation device (40) comprises a filter device (45).

3. A device (1) according to claim 1 or 2, **characterized in that** the second extrusion device (20) comprises downstream of a first degasification device (31) a second degasification device (32) which is preferably arranged at a position (23) located in an area of the extruder which is defined by a ratio of the length (L) of a screw (24) of the second extrusion device (20) to the diameter (D) of the screw (24) of 15 to 20, measured from the first degasification device (31).

4. A device (1) according to any of the preceding claims, **characterized in that** the first extrusion device (10) comprises a degasification device (30).

5. A device (1) according to any of the preceding claims, **characterized by** a forced charging system (55) for supplying the fibre material (5) to the fibre material inlet (27) of the second extrusion device (20).

6. A device (1) according to claim 5, **characterized in that** the forced charging system (55) comprises a bridge breaker device (56) and/or a fibre shredding device (57) and/or a drying device (58).

7. A device (1) according to claim 5 or 6, **characterized in that** the forced charging system (55) is equipped with wear protection by using powder metallurgical steels and/or hardened, armoured or hipped surfaces.

8. A device (1) according to any of claims 5 to 7, **characterized in that** the forced charging system (55) is provided with a throughput control (60), wherein an actual throughput of the melted, purified polymeric substrate material (4) is determinable by means of a throughput detection device and the throughput control (60) compares the actual throughput to a selectable desired throughput and adjusts the material throughput of the forced charging system (55) such that the deviation of the actual throughput from the desired throughput is minimal.

9. A device (1) according to any of claims 5 to 8, **characterized in that** the forced charging system (55) is provided with a throughput control (60) which conducts measurements of the actual density of the composite material (7) and compares the measured actual density to a selectable desired density and adjusts the material throughput of the forced charging system (55) such that the deviation of the actual density from the desired density is minimal.

10. A device (1) according to any of the preceding claims, **characterized by** a dynamic melt mixer (70) arranged at the downstream end (25) of the second extrusion device (20), by means of which a clearance (71) is adjustable.

11. A device (1) according to claim 10, **characterized in that** a maximum fibre length of the fibre material (5) is adjusted by selecting the clearance (71) at the dynamic melt mixer (70).

12. A device (1) according to any of the preceding claims, **characterized in that** a safety filtration unit (90) is provided in front of the supply of the mixture of the melted, purified polymeric substrate material and the fibre material into a granulating unit or, respectively, into another discharge device, wherein the filtration unit having openings which, on the one hand, are smaller than the bores of a subsequently arranged granulating die or other discharge openings, but, on the other hand, have a size of at least 0.5 mm.

13. A method for the production of a filled polymeric composite material (7) containing a polymeric substrate material (2) and a fibre material (5) as a filling material, with the polymeric substrate material (2) preferably containing a main portion of recycling polymer waste (3), and wherein the method comprises the following steps:
- introducing the polymeric substrate material (2) into a first extrusion device (10);
- melting as well as, optionally, degassing (30) the polymeric substrate material (2) in the first extrusion device (10); **characterized by**
- purifying the melted polymeric substrate material (2) by means of a melt preparation device (40) preferably comprising a filter device (41);
- feeding the melted, purified polymeric substrate material (4) into a second extrusion device (20);
- introducing a fibre material (5) into the second extrusion device (20) upstream of the supply of the melted, purified polymeric substrate material (4);
- mixing the fibre material (5) and the melted, purified polymeric substrate material (4) in the second extrusion device (20);
- degassing (30) the mixture (6) of the melted, purified polymeric substrate material (4) and the fibre material (5) in the second extrusion device (20).

14. A method according to claim 13, **characterized in that**, in the second extrusion device (20),
- the supplied fibre material (5) is degassed (31) upstream of the supply of the melted, purified polymeric substrate material (4)
and/or
- the mixture (6) of the melted, purified polymeric substrate material (4) and the fibre material (5) is degassed (32).

15. A method according to claim 13 or 14, **characterized in that** the fibre material (5) is supplied to the second extrusion device (20) by means of a forced charging system (55), wherein the forced charging system (55) is optionally provided with a throughput control (60) which
- determines an actual throughput of the melted, purified polymeric substrate material (4), compares the actual throughput to a selectable desired throughput and adjusts the material throughput of the forced charging system (55) such that the deviation of the actual throughput from the desired throughput is minimal; and/or
- conducts measurements of the actual density of the composite material (7), compares the measured actual density to a selectable desired density and adjusts the material throughput of the forced charging system (55) such that the deviation of the actual density from the desired density is minimal.

## Revendications

1. Dispositif (1) de fabrication d'un matériau composite polymère rempli (7), qui contient un matériau de support polymère (2) et un matériau fibreux (5) comme matériau de remplissage, dans lequel le matériau de support polymère (2) ou le matériau fibreux (5) contient de préférence une part principale de déchets polymères de recyclage (3) ou de matériau fibreux de recyclage (5a), le dispositif comprenant un premier système d'extrusion (10) servant à faire fondre le matériau de support polymère (2) et pourvu d'une entrée (11) pour le matériau de support polymère (2) et d'une sortie (12) pour le matériau de support polymère (2) fondu, ainsi qu'un deuxième système d'extrusion (20), dans lequel le deuxième système d'extrusion (20) comprend au moins un système de dégazage (31, 32), **caractérisé en ce que** le dispositif comprend un système de traitement de matière fondue (40) servant à nettoyer le matériau de support polymère (2) fondu, lequel système de traitement de matière fondue (40) comprend une entrée (41) qui est reliée à la sortie (12) du premier système d'extrusion (10), et une sortie (42) pour le matériau de support polymère nettoyé (4), et **en ce que** le deuxième système d'extrusion (20) comprend une entrée de matière fondue (26) qui est reliée à la sortie (42) du système de traitement de matière fondue (40), et une entrée de matériau fibreux (27) pour le matériau fibreux (5) agencée en amont de l'entrée de matière fondue (26).

2. Dispositif (1) selon la revendication 1, **caractérisé en ce que** le système de traitement de matière fondue (40) comprend un système de filtration (45).

3. Dispositif (1) selon la revendication 1 ou 2, **caractérisé en ce que** le deuxième système d'extrusion (20) comprend en aval d'un premier système de dégazage (31) un deuxième système de dégazage (32), qui est agencé de préférence dans une position (23) qui se situe dans une zone de l'extrudeuse qui est définie par un rapport de la longueur (L) d'une vis sans fin (24) du deuxième système d'extrusion (20) sur le diamètre (D) de la vis sans fin (24) de 15 à 20, mesuré par le premier système de dégazage (31).

4. Dispositif (1) selon l'une quelconque des revendications précédentes, **caractérisé en ce que** le premier système d'extrusion (10) comprend un système de dégazage (30).

5. Dispositif (1) selon l'une quelconque des revendications précédentes, **caractérisé par** un système de chargement forcé (55) pour l'amenée du matériau fibreux (5) à l'entrée de matériau fibreux (27) du deuxième système d'extrusion (20).

6. Dispositif (1) selon la revendication 5, **caractérisé en ce que** le système de chargement forcé (55) comprend un système pour casser des ponts (56) et/ou un système de broyage de fibres (57) et/ou un système de séchage (58).

7. Dispositif (1) selon la revendication 5 ou 6, **caractérisé en ce que** le système de chargement forcé (55) est équipé pour être protégé contre l'usure du fait de l'utilisation d'aciers de la métallurgie des poudres et/ou de surfaces durcies, revêtues d'un blindage ou ayant subi une compression isostatique à chaud.

8. Dispositif (1) selon l'une quelconque des revendications 5 à 7, **caractérisé en ce que** le système de chargement forcé (55) est équipé d'une commande du débit (60), dans lequel un débit réel du matériau de support polymère nettoyé (4) fondu est déterminé au moyen d'un système de détection de débit et la commande de débit (60) compare le débit réel à un débit théorique pouvant être sélectionné et ainsi régule le débit de matériau du système de chargement forcé (55), de sorte que l'écart entre le débit réel et le débit théorique soit minimal.

9. Dispositif (1) selon l'une quelconque des revendications 5 à 8, **caractérisé en ce que** le système de chargement forcé (55) est équipé d'une commande dé débit (60) qui réalise les mesures de la densité réelle du matériau composite (7) et compare la densité réelle mesurée à une densité théorique pouvant être sélectionnée et régule le débit de matériau du système de chargement forcé (55), de sorte que l'écart entre la densité réelle et la densité théorique soit minimal.

10. Dispositif (1) selon l'une quelconque des revendications précédentes, **caractérisé par** un mélangeur de matière fondue dynamique (70), qui est agencé à l'extrémité aval (25) du deuxième système d'extrusion (20), au moyen duquel la dimension d'un interstice (71) peut être réglée.

11. Dispositif (1) selon la revendication 10, **caractérisé en ce qu'**une longueur de fibre maximale du matériau fibreux (5) est réglée par sélection de la dimension d'un interstice (71) sur le mélangeur de matière fondue dynamique (70).

12. Dispositif (1) selon l'une quelconque des revendications précédentes, **caractérisé en ce qu'**une unité de filtration de sécurité (90) est prévue avant l'amenée du mélange de matériau de support polymère nettoyé fondu et de matériau fibreux dans une unité de granulation ou un autre dispositif de distribution, dans lequel l'unité de filtration comprend des ouvertures qui sont d'une part plus petites que les trous d'une buse de granulation agencée à la suite ou d'autres ouvertures de distribution, mais qui présentent d'autre part une dimension d'au moins 0,5 mm.

13. Procédé de fabrication d'un matériau composite polymère rempli (7), qui contient un matériau de support polymère (2) et un matériau fibreux (5) comme matériau de remplissage, dans lequel le matériau de support polymère (2) contient de préférence une part principale de déchets polymères de recyclage (3) et dans lequel le procédé comprend les étapes suivantes :
- introduire le matériau de support polymère (2) dans un premier système d'extrusion (10) ;
- faire fondre et éventuellement dégazer (30) le matériau de support polymère (2) dans le premier système d'extrusion (10) ; **caractérisé par**
- le nettoyage du matériau de support polymère (2) fondu au moyen d'un système de traitement de matière fondue (40), lequel comporte de préférence un système de filtration (41) ;
- l'amenée du matériau de support polymère nettoyé (4) fondu dans un deuxième système d'extrusion (20) ;
- l'introduction du matériau fibreux (5) dans le deuxième système d'extrusion (20) en amont de l'amenée du matériau de support polymère nettoyé (4) fondu ;
- le mélange du matériau fibreux (5) et du matériau de support polymère nettoyé (4) fondu dans le deuxième système d'extrusion (20) ;
- le dégazage (30) du mélange (6) du matériau de support polymère nettoyé (4) fondu et du matériau fibreux (5) dans le deuxième système d'extrusion (20).

14. Procédé selon la revendication 13, **caractérisé en ce que** dans le deuxième système d'extrusion (20)
- le matériau fibreux (5) amené est dégazé (31) en amont de l'amenée du matériau de support polymère nettoyé (4) fondu et/ou
- le mélange (6) du matériau de support polymère nettoyé (4) fondu et du matériau fibreux (5) est dégazé (32).

15. Procédé selon la revendication 13 ou 14, **caractérisé en ce que** le matériau fibreux (5) est amené au moyen d'un système de chargement forcé (55) du deuxième système d'extrusion (20), dans lequel le système de chargement forcé (55) est équipé le cas échéant d'une commande de débit (60), qui
- détermine le débit réel du matériau de support polymère nettoyé (4) fondu, compare le débit réel à un débit théorique pouvant être sélectionné et régule le débit de matériau du système de chargement forcé (55), de sorte que l'écart entre le débit réel et le débit théorique soit minimal ; et/ou
- réalise les mesures de la densité réelle du matériau composite (7), qui compare la densité réelle mesurée à une densité théorique pouvant être sélectionnée et régule le débit de matériau du système de chargement forcé (55), de sorte que l'écart entre la densité réelle et la densité théorique soit minimal.
